Europäisches Patentamt

European Patent Office

Office européen des brevets

(19)

(11) **EP 1 043 604 A1**

(12) ## DEMANDE DE BREVET EUROPEEN

(43) Date de publication:
**11.10.2000 Bulletin 2000/41**

(51) Int Cl.⁷: **G01V 3/38**, G01V 3/20

(21) Numéro de dépôt: **00400943.7**

(22) Date de dépôt: **06.04.2000**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **08.04.1999  FR 9904381**

(71) Demandeur: **Souhaite, Philippe
75017 Paris (FR)**

(72) Inventeur: **Souhaite, Philippe
75017 Paris (FR)**

(54)  **Procédé de détermination de la résistivité des formations traversées par un forage**

(57)    L'invention concerne un procédé de détermination de la résistivité de formations, comprenant les étapes consistant à

effectuer, à l'aide d'un outil de mesure et d'enregistrement de résistivité, une diagraphie de résistivité dans un forage réalisé dans ces formations, en mesurant et en enregistrant au moins une résistivité en des points d'échantillonnage espacés le long du forage,
déduire de cette diagraphie un modèle initial de la résistivité dans les formations traversées par le forage,
calculer la réponse dudit outil audit modèle initial,
comparer cette réponse calculée à la diagraphie enregistrée, et
déduire de cette comparaison un nouveau modèle de résistivité.

La réponse de l'outil au modèle initial est calculée sur la base d'un maillage des formations dépendant uniquement de la géométrie de l'outil,

à chaque maille sont affectées une résistivité verticale et une résistivité horizontale généralement différentes,
et le procédé comprend éventuellement l'étape consistant à réaliser au moins une itération supplémentaire.

Fig. 1

**Description**

La présente invention concerne un procédé de détermination de la résistivité des formations traversées par un forage, et plus particulièrement un tel procédé comprenant les étapes consistant à

effectuer, à l'aide d'un outil de mesure et d'enregistrement de résistivité, une diagraphie de résistivité dans le forage réalisé dans ces formations, en mesurant et en enregistrant au moins une résistivité en des points d'échantillonnage espacés le long du forage,
déduire de cette diagraphie un modèle initial de la résistivité dans les formations traversées par le forage,
calculer la réponse dudit outil audit modèle initial,
comparer ladite réponse calculée à la diagraphie enregistrée, et
déduire de cette comparaison un nouveau modèle de résistivité.

On observera préalablement que l'étape consistant à effectuer, à l'aide d'un outil de mesure et d'enregistrement de résistivité, une diagraphie de résistivité dans le forage réalisé dans ces formations, en mesurant et en enregistrant au moins une résistivité en des points d'échantillonnage espacés le long du forage, peut être physiquement dissociée des étapes suivantes. En effet, le traitement des données brutes obtenues sur le site du forage peut être réalisé dans une phase ultérieure du procédé selon l'invention.

Le procédé selon l'invention est destiné à corriger les effets d'hétérogénéité sur les mesures de résistivité obtenues à l'aide de dispositifs à électrodes, par exemple ceux désignés par les marques Latérologs, Pseudo-Latérologs, SFL, etc. Dans ces dispositifs, la résistivité des formations est obtenue en mesurant la résistance d'un tube de courant entre deux surfaces équipotentielles passant par deux électrodes de mesure de tension. On convertit cette résistance en résistivité en la multipliant par un coefficient géométrique K qui a la dimension d'une longueur, et qui reflète la forme du tube de courant. En milieu homogène, cette forme est bien définie et constante, et l'on peut calculer la valeur du coefficient K.

En milieu hétérogène, la situation se complique du fait que le milieu emplissant le tube peut ne plus être homogène et que, même s'il est homogène, la forme du tube change selon la distribution de la résistivité aux alentours de l'appareil. On utilise cependant, faute de mieux, le même coefficient K déterminé en milieu homogène, d'où une erreur sur la valeur mesurée. Dans tout ce qui suit, on suppose que le milieu a une symétrie de révolution autour de l'axe du sondage, c'est à dire que le pendage apparent des couches est nul.

On a traditionnellement distingué les trois effets ci-après, que l'on a tenté de corriger successivement, dans l'ordre suivant :

a) effet de trou dû à la présence du sondage généralement rempli d'une boue beaucoup plus conductrice que les formations ;

b) effet d'épontes dû à la présence au-dessus et au-dessous de la zone étudiée de formations généralement hétérogènes qui peuvent être bien plus conductrices ou bien plus résistives que les formations qui se trouvent en face de l'appareil (il est à noter que l'effet d'épontes peut être considérable même si la sonde est toute entière contenue dans un banc homogène entouré d'épontes de résistivité différente) ;

c) effet d'invasion dû à la présence au voisinage du sondage de filtrat de boue qui a remplacé partiellement les fluides initialement présents dans les formations.

On peut en première approximation représenter la zone envahie par une région s'étendant entre le sondage et un cylindre de diamètre $d_i$ coaxial au sondage et ayant une résistivité $R_{x0}$ radialement uniforme, et à l'extérieur de laquelle se trouve la zone vierge de résistivité $R_t$. Ce modèle comporte trois inconnues $R_t$, $R_{x0}$ et $d_i$, raison pour laquelle on enregistre simultanément trois mesures ayant des profondeurs d'investigation radiale différentes, afin de déterminer les trois inconnues.

En ce qui concerne l'effet de trou et l'effet d'invasion, on peut prévoir un nombre relativement restreint de situations pour lesquelles les effets sont calculés et stockés, et la correction dans une configuration donnée s'obtient par interpolation entre les situations dont les effets ont été stockés.

Il n'en est pas de même pour l'effet des épontes, car celles-ci sont constituées pour chaque point de l'enregistrement par l'ensemble des formations situées au-dessus et au-dessous du point considéré. La distribution de la résistivité dans cet ensemble peut être absolument quelconque et il n'est pas possible de considérer une distribution donnée comme intermédiaire entre deux distributions dont les effets auraient été calculés et stockés. On était donc obligé jusqu'à présent d'avoir recours à une méthode approchée, qui sera décrite plus loin.

Les trois effets distingués ci-dessus sont loin d'être indépendants, si bien que, même si l'on savait les corriger parfaitement, ce qui n'est pas le cas pour l'effet d'épontes, le résultat serait encore entaché d'erreur si l'on continuait à les corriger successivement et indépendamment les uns des autres.

Les outils utilisés pour réaliser les diagraphies de résistivité dans les forages, du type de ceux rappelé ci-dessus, sont parfaitement connus, notamment dans le domaine de la recherche pétrolière. On ne les décrira donc pas ici.

On rappellera toutefois que ces diagraphies sont généralement constituées par l'enregistrement en fonction de la profondeur de trois grandeurs représentant, en chaque point d'échantillonnage, donc pour une profondeur donnée, trois valeurs de la résistivité du terrain dans un plan horizontal comme indiqué ci-dessus. Ces résistivités sont désignées par $R_{x0}$ déjà mentionnée, microrésistivité ou résistivité de la zone envahie, $R_{LLs}$, résistivité rapprochée, et $R_{LLd}$, résistivité profonde.

La résistivité $R_{x0}$ est celle qui est mesurée à proximité immédiate de la paroi du forage, donc dans la zone envahie par la boue de forage où l'eau et les hydrocarbures naturellement contenus dans le terrain ont été en partie remplacés par le filtrat de boue. Les résistivités $R_{LLs}$ et $R_{LLd}$ sont estimées à de plus grandes profondeurs, respectivement relativement rapprochée et relativement éloignée - il s'agit évidemment ici de profondeur transversale d'investigation, mesurée perpendiculairement à l'axe du forage.

Actuellement, on corrige les effets de trou sur les mesures $R_{LLd}$ et $R_{LLs}$ à l'aide d'algorithmes simples. On applique ensuite, quand les circonstances sont favorables c'est à dire quand les épontes sont constituées d'une succession de bancs épais assez peu contrastés, un traitement très approché de correction d'effet d'épontes des mesures $R_{LLd}$ et $R_{LLs}$, et l'on utilise ensuite ces mesures pour corriger l'effet d'invasion comme si le banc était infiniment épais. On utilise pour cela la valeur de $R_{x0}$ mesurée en même temps que $R_{LLd}$ et $R_{LLs}$.

Les procédés de correction utilisés actuellement pour l'effet d'épontes, utilisant par exemple le programme désigné sous le nom de SHOLAT - pour *Laterolog Shoulder Effect Correction,* ou Correction d'Effet d'Eponte pour Latérolog - consistent à déterminer la réponse de l'outil à un modèle initial de la résistivité des formations, à comparer les diagraphies calculées aux diagraphies enregistrées, et à déterminer itérativement le modèle des formations qui fournit le meilleur accord entre les diagraphies enregistrées et calculées. Ils présentent toutefois un certain nombre d'inconvénients.

En premier lieu, les procédés connus sont fondés sur un modèle rectangulaire des formations, qui sont assimilées à un empilement de couches de résistivité constante séparées par des limites discontinues. Bien que les discontinuités soient courantes dans les formations géologiques, la résistivité entre deux discontinuités successives est généralement loin d'être constante. Cette difficulté est cependant relativement bénigne dans la mesure où une rampe peut toujours être approchée par une succession d'échelons.

La difficulté principale résultant de la rectangularisation des diagraphies se rencontre lorsque la distance moyenne entre des discontinuités successives est inférieure à la résolution verticale de l'outil utilisé. L'alternative est alors la suivante.

Il est possible en premier lieu de déterminer les positions des limites de la rectangularisation à partir d'enregistrements à faible résolution de $R_{LLs}$ et $R_{LLd}$, ce qui revient à remplacer un ensemble de limites par une seule limite équivalente. Mais le modèle rectangulaire obtenu est alors peu ressemblant au profil effectif de résistivité, ce qui conduit à des erreurs de détermination de la réponse de l'outil à ce profil.

Une autre solution consiste à déterminer les positions des limites de la rectangularisation à partir d'un dispositif à haute résolution verticale, par exemple pour la mesure de la microrésistivité $R_{x0}$, ce qui conduit à une multiplication des limites qu'il n'est pas possible de traiter convenablement. En effet, on ne dispose pas d'informations à haute résolution sur la résistivité profonde, qui permettraient de déterminer la résistivité à affecter aux intervalles entre les limites successives.

Mais l'inconvénient majeur des procédés connus réside dans la manière dont est déterminée la réponse de l'outil à un modèle de formations donné. Ces procédés utilisent en effet des approximations fondées sur une superposition d'effets des limites des couches successives qui ne peuvent donner des résultats acceptables qu'au milieu de couches très épaisses, ou à proximité d'une limite unique.

Enfin, ces procédés de l'état de la technique ne corrigent que les effets d'épontes. Les effets de trou et d'invasion doivent être corrigés indépendamment, alors qu'en fait ils sont dépendants de l'effet d'épontes. Des artefacts tels que des "cornes" peuvent se produire au voisinage des limites, et ces cornes peuvent même être considérées par le programme comme des couches distinctes dont les différences de résistivité avec les formations environnantes sont amplifiées.

La présente invention vise à pallier ces inconvénients.

Plus particulièrement, l'invention a pour but de fournir un procédé de détermination de la résistivité des formations traversées par un forage, qui soit basé sur un calcul exact de la réponse de l'outil à un modèle de formations donné.

L'invention a également plus particulièrement pour but de fournir un tel procédé qui évite la rectangularisation des diagraphies des procédés connus et les inconvénients qui en résultent.

A cet effet, et selon un premier aspect de l'invention, celle-ci a pour objet un procédé de détermination de la résistivité des formations traversées par un forage, à partir d'une diagraphie de résistivité enregistrée dans le forage réalisé dans ces formations, ledit procédé comprenant les étapes consistant à

déduire de cette diagraphie un modèle initial de la résistivité dans les formations traversées par le forage,
calculer la réponse dudit outil audit modèle initial,
comparer ladite réponse calculée à la diagraphie enregistrée, et
déduire de cette comparaison un nouveau modèle de résistivité,

procédé caractérisé par le fait que

ladite réponse de l'outil au modèle initial est calculée sur la base d'un maillage des formations dépendant uniquement de la géométrie de l'outil, et à chaque maille sont affectées une résistivité verticale et une résistivité horizontale généralement différentes.

Selon un autre aspect de l'invention, celle-ci a pour objet un procédé de détermination de la résistivité des formations traversées par un forage, comprenant les étapes consistant à

effectuer, à l'aide d'un outil de mesure et d'enregistrement de résistivité, une diagraphie de résistivité dans le forage réalisé dans ces formations, en mesurant et en enregistrant au moins une résistivité en des points d'échantillonnage espacés le long du forage,

déduire de cette diagraphie un modèle initial de la résistivité dans les formations traversées par le forage,

calculer la réponse dudit outil audit modèle initial,

comparer ladite réponse calculée à la diagraphie enregistrée, et

déduire de cette comparaison un nouveau modèle de résistivité,

procédé caractérisé par le fait que

ladite réponse de l'outil au modèle initial est calculée sur la base d'un maillage des formations dépendant uniquement de la géométrie de l'outil, et à chaque maille sont affectées une résistivité verticale et une résistivité horizontale généralement différentes.

De préférence, la diagraphie enregistrée est moyennée préalablement à la comparaison avec la réponse calculée.

Le procédé selon l'invention est donc un procédé d'inversion, dont le type est connu en lui-même et est utilisé dans les procédés de l'art antérieur. On suppose connu un modèle initial de résistivité, on calcule la réponse de l'outil à ce modèle, on compare le résultat du calcul à une diagraphie effectivement enregistrée, et on déduit de cette comparaison un nouveau modèle plus proche de la résistivité réelle que le modèle initial.

Toutefois, dans le procédé selon l'invention, on ne réalise aucune rectangularisation. On suppose que le profil réel de résistivité est relativement proche de l'une des courbes enregistrées (en général $R_{LLd}$) et qu'il ne comporte pas de discontinuité. Cette courbe est prise comme modèle initial et l'on suppose que les formes et les pentes du profil réel sont similaires à celles de ce modèle initial, l'une des courbes pouvant être déduite de l'autre en la multipliant par un facteur variable en fonction de la profondeur, mais dont le spectre spatial ne comporte pas de fréquence supérieure à celle correspondant à la résolution verticale de l'outil.

De véritables discontinuités peuvent exister dans les formations, mais on n'en est pas sûr, et l'on ne peut pas recréer les hautes fréquences spatiales qui ont été perdues du fait que l'outil exerce un filtrage passe-bas sur la résistivité des formations. En s'abstenant de placer des discontinuités, on évite certaines suppositions risquées des procédés de l'art antérieur, ce qui rend le procédé moins sensible au bruit.

On observera que le procédé selon l'invention s'applique à des formations non envahies. Cette limitation est relativement peu restrictive dans la mesure où ce procédé est en l'état bien supérieur à ceux employés jusqu'à présent, même si les formations sont envahies par endroits.

Sans invasion, la seule inconnue à déterminer en fonction de la profondeur est $R_t$. Du fait de l'effet d'épontes qui affecte différemment $R_{LLd}$ et $R_{LLs}$, on peut observer dans une série de formations non envahies des écarts entre les trois valeurs $R_{x0}$, $R_{LLd}$ et $R_{LLs}$ qui normalement indiqueraient que les formations sont envahies, ou qui souvent correspondent à des séquences de valeurs impossibles dans un banc épais (par exemple $R_{LLd} > R_{x0} > R_{LLs}$)

Après application du procédé selon l'invention, et si l'hypothèse de non-invasion est correcte, les courbes corrigées $R_{LLdcor}$ et $R_{LLscor}$ doivent pratiquement coïncider avec $R_{x0}$ et indiquer la valeur de $R_t$. Si elles ne le font pas dans certaines zones, c'est que les formations correspondantes sont envahies et la valeur de $R_t$ peut alors être déterminée comme on le fait actuellement, mais en utilisant $R_{LLdcor}$ et $R_{LLscor}$ qui sont des valeurs de $R_{LLd}$ et $R_{LLs}$ convenablement corrigées des effets de trou et d'épontes, en tenant compte du couplage entre ces deux effets. Le seul effet dont on ne tient pas compte est le couplage entre effet d'invasion, effet d'épontes et effet de trou, et ce bien sûr uniquement dans les formations envahies.

Dans un mode de réalisation particulier, le modèle initial est constitué par la diagraphie de résistivité profonde $R_{LLd}$ effectuée dans le forage. Cette résistivité est supposée être constante dans un plan horizontal de profondeur donnée.

Un autre modèle initial pourrait être envisagé. Dans le cas où plusieurs itérations sont effectuées, on peut prendre comme modèle initial à chaque itération la courbe corrigée obtenue par l'itération précédente.

Une autre caractéristique de l'invention est que la réponse de l'outil au modèle initial, et éventuellement aux modèles suivants, est calculée, notamment par une méthode d'éléments finis, sur la base d'un maillage dépendant uniquement de la géométrie de l'outil. Jusqu'à présent, on a uniquement calculé la réponse d'un outil à électrodes à un modèle dit "rectangulaire", c'est à dire constitué d'une série de bancs séparés par des frontières abruptes, et des noeuds du maillage devaient être placés sur les discontinuités, de manière à assurer une résistivité constante dans chaque maille.

Etant donné que, dans l'invention, on suppose une résistivité variant de manière continue dans la limite du pas d'échantillonnage, et que l'on ne peut pas réduire la taille des mailles à celle de ce pas, on adopte un maillage unique lié à l'outil, généralement indépendant de la configuration des formations et de la position de l'outil. Ce maillage est adapté à la géométrie de l'outil, composé de mailles fines à proximité des électrodes, et devenant plus lâches au fur et à mesure que l'on s'en éloigne, radialement et verticalement.

Une autre caractéristique de l'invention est liée à la détermination de la résistivité à affecter à chaque maille. Lorsque l'on choisit la dimension d'une maille donnée, on suppose que les détails du flux électrique dans cette maille n'ont pas d'incidence sur le résultat. Cependant, la configuration des formations dans la maille crée une anisotropie influant sur la facilité relative avec laquelle le courant s'écoule dans la maille dans les directions horizontale et verticale. Cette anisotropie affecte la réponse de l'outil, de sorte que l'attribution d'une résistivité moyenne isotrope à une telle maille fournirait des résultats erronés.

Un aspect de l'invention consiste donc à affecter à chaque maille une résistivité anisotrope avec une résistivité verticale et une résistivité horizontale généralement différentes.

La détermination de ces résistivités est basée sur les considérations suivantes : les formations à l'intérieur d'une maille peuvent être considérées comme un empilement de bancs horizontaux d'épaisseurs égales au pas d'échantillonnage (à titre d'exemple, 6 pouces soit 15 cm pour le Double Latérolog), et de résistivité égale aux valeurs successives mesurées aux points d'échantillonnage.

Ces différentes zones sont en série pour les courants circulant verticalement, et la résistance verticale d'une maille est égale à la somme des résistances des parties des différents bancs horizontaux inclus dans la maille, ce qui revient à dire pour une maille rectangulaire que la résistivité verticale $R_v$ d'une maille du modèle initial est égale à la moyenne arithmétique des résistivités mesurées à chaque point d'échantillonnage de la diagraphie dans l'intervalle correspondant à ladite maille.

De même, les différentes zones sont en parallèle pour les courants circulant horizontalement, si bien que la conductance horizontale d'une maille est égale à la somme des conductances des parties des différents bancs horizontaux inclus dans la maille. Autrement dit, pour une maille rectangulaire, la résistivité horizontale $R_h$ d'une maille du modèle initial est égale à la moyenne harmonique des résistivités mesurées à chaque point d'échantillonnage de la diagraphie dans l'intervalle correspondant à ladite maille.

Si les mailles ne sont pas rectangulaires, il est aisé de voir que $R_v$ et $R_h$ ne sont plus de simples moyennes arithmétiques ou harmoniques à poids égaux, mais deviennent des moyennes pondérées par des coefficients qui dépendent de la géométrie de la maille, et qui sont bien définis et calculables pour chaque maille et pour chaque profondeur d'échantillonnage.

Si la dimension de la maille est inférieure ou égale au pas d'échantillonnage de la diagraphie, la résistivité dans la maille est supposée isotrope, $R_v$ et $R_h$ étant chacun égaux à la résistivité de l'intervalle d'échantillonnage contenant la maille.

En d'autres termes, l'hétérogénéité des formations, dont on tenait compte jusqu'à présent en ajoutant des noeuds et des mailles, est maintenant prise en compte à l'intérieur de chaque maille par la manière dont elle affecte la résistivité moyenne et par l'anisotropie qu'elle provoque.

On verra que la pondération des moyennes arithmétique et harmonique des résistivités permet de prendre en compte les variations de diamètre du forage.

On notera également qu'un autre avantage du procédé selon l'invention réside dans le fait qu'il corrige simultanément les effets d'épontes et de trou, et prend donc automatiquement en compte le couplage entre ces deux effets.

Enfin, on peut appliquer aux valeurs de la diagraphie enregistrée une correction fonction des valeurs de la diagraphie moyennée et des valeurs de la réponse calculée.

Plus particulièrement, ladite correction peut consister à multiplier les valeurs de la diagraphie enregistrée par le rapport des valeurs correspondantes de la diagraphie moyennée et de la réponse calculée.

On décrira maintenant, à titre d'exemple non limitatif, un mode de réalisation particulier de l'invention, en référence aux dessins schématiques annexés dans lesquels :

- la figure 1 est un exemple de maillage utilisé dans le procédé selon l'invention ;

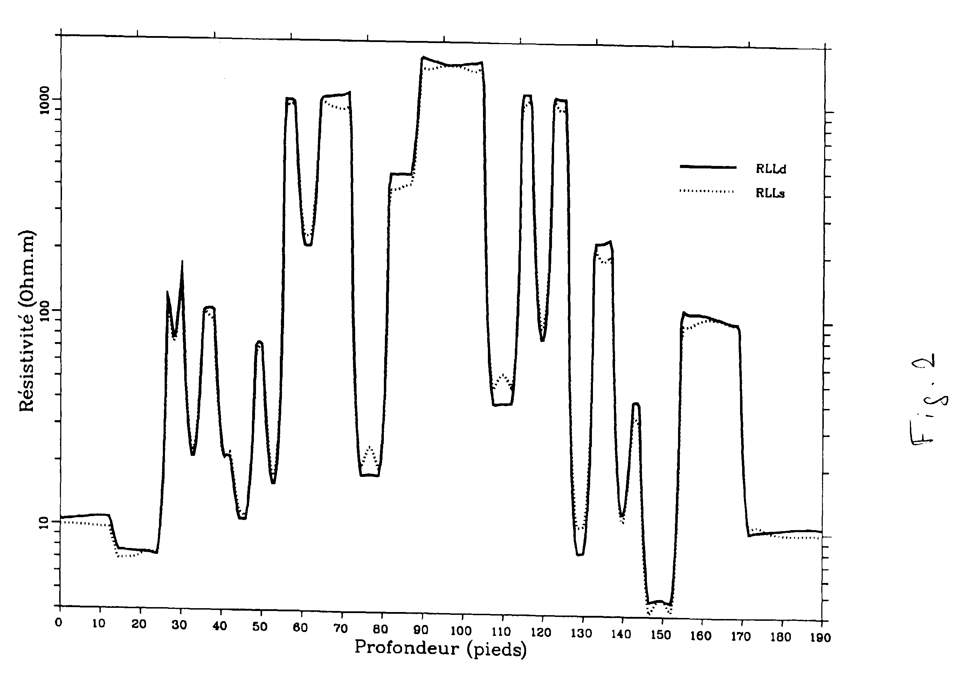

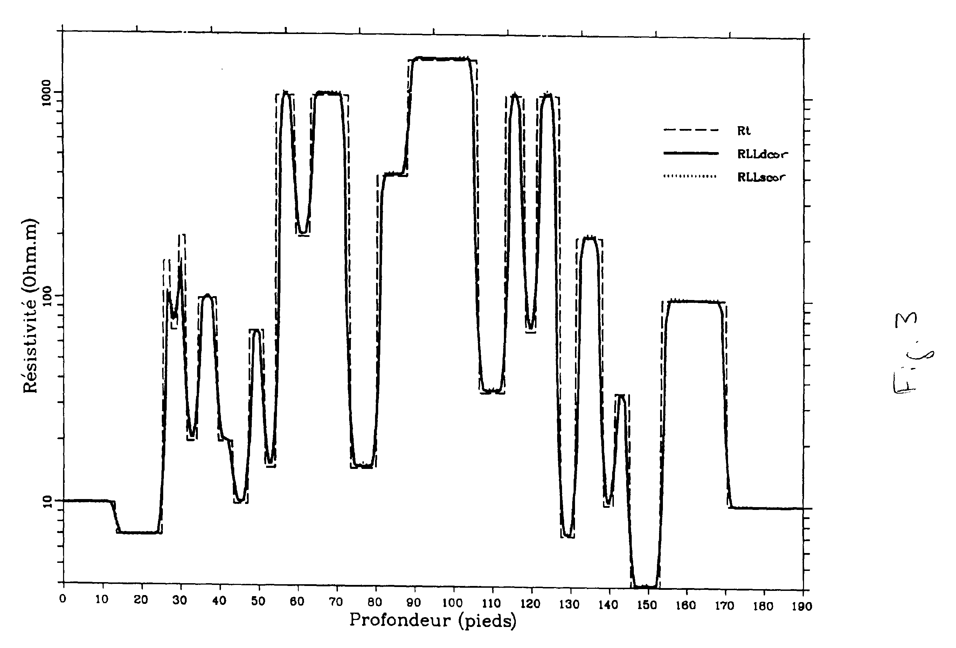

- la figure 2 montre les courbes initiales $R_{LLd}$ et $R_{LLs}$ que l'on obtient en réalisant une diagraphie de résistivité dans des formations dont la résistivité réelle $R_t$ est représentée à la figure 3 ; et

- la figure 3 montre, outre la courbe $Rt$, les courbes $R_{LLdcor}$ et $R_{LLscor}$ corrigées à l'aide du procédé selon l'invention.

En pratique, on part de la diagraphie de la résistivité profonde $R_{LLd}$ que l'on suppose être la première meilleure estimation du profil de résistivité des formations.

Le procédé selon l'invention décrit ci-après utilise un programme de calcul par éléments finis, étant entendu que tout autre procédé basé sur un maillage des formations (différences finies, volumes finis, ...) est utilisable.

Les méthodes d'éléments finis sont employées dans de nombreux domaines d'ingénierie et de physique. On rappellera simplement ici qu'elles consistent à découper l'espace en éléments polyédriques contigus, homogènes et de forme géométrique simple, où les quantités peuvent être exprimées de façon approximative (interpolées linéairement) en fonction de leurs valeurs aux sommets des polyèdres.

Dans le cas présent, le calcul de la réponse d'un outil de résistivité se ramène à la résolution d'un système d'un grand nombre d'équations linéaires simultanées. Le découpage de l'espace continu en éléments finis est appelé maillage.

Du fait de la symétrie de révolution autour de l'axe du sondage, tous les courants émis par les différentes électrodes circulent dans des plans passant par cet axe et le milieu tout entier peut être remplacé par un demi-plan limité par l'axe de révolution.

Un maillage simple, qui permet de traiter facilement le problème de l'anisotropie créée par la superposition de différentes couches à l'intérieur d'une maille, consiste à utiliser des mailles rectangulaires dont les côtés sont parallèles à l'axe de révolution et à la direction perpendiculaire, dans le plan du maillage. Chacune de ces mailles rectangulaires représente en fait le volume engendré en faisant tourner le rectangle d'un tour complet autour de l'axe de révolution.

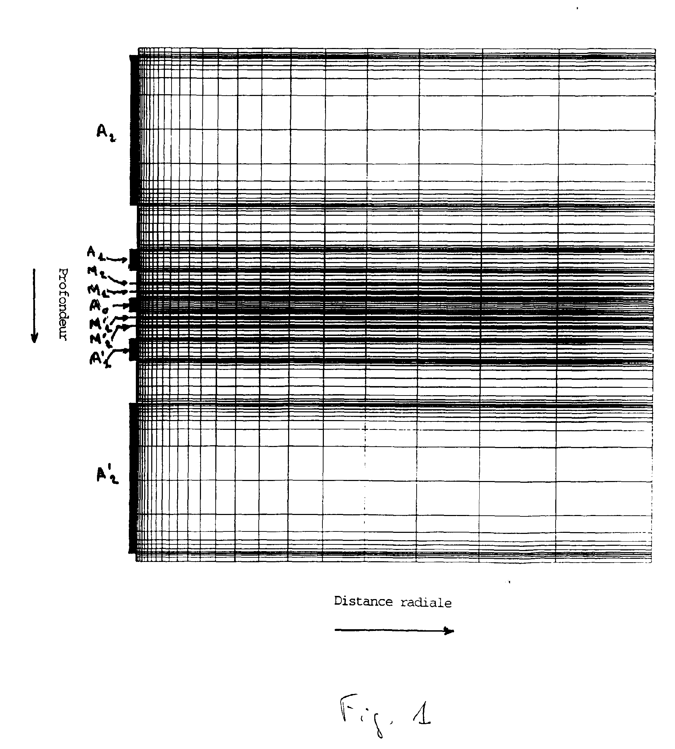

La figure 1 montre un exemple partiel de maillage utilisé au voisinage du Double Latérolog, avec le rayon en abscisse et la profondeur en ordonnée, étant entendu que ce maillage se prolonge bien au-delà de la figure, avec des mailles de plus en plus grandes au fur et à mesure que l'on s'éloigne dans les directions radiale et verticale. D'autres réalisations sont possibles, en particulier des maillages à éléments triangulaires.

Le Double Latérolog est décrit par exemple dans l'ouvrage *"Diagraphies dans les sondages",* de R. Desbrandes, Editions Technip. On voit le schéma de principe d'un tel appareil à la page 137 de cet ouvrage, avec ses électrodes. Ces mêmes électrodes ont été reportées à la figure 1 avec les mêmes références, en vis-à-vis du maillage.

A l'aide d'un programme de calcul par éléments finis, on calcule niveau par niveau la réponse de l'outil $R_{LLscal}$ et $R_{LLdcal}$ au profil initial de résistivité. Comme indiqué ci-dessus, on affecte à chaque maille une résistivité verticale égale à la moyenne arithmétique des résistivités mesurées à chaque pas d'échantillonnage contenu dans la maille, et une résistivité horizontale égale à la moyenne harmonique des mêmes résistivités. Les niveaux auxquels la réponse de l'outil est calculée sont soit les profondeurs d'échantillonnage soit, si l'on souhaite limiter le temps de calcul, des profondeurs séparées par un multiple du pas d'échantillonnage.

Le forage est également modélisé. Il est possible de prendre en compte les variations de son diamètre, données par une diagraphie de diamétrage. Ceci est réalisé avec un maillage fixe et des mailles anisotropes, en étendant aux frontières radiales les considérations développées ci-dessus au sujet des frontières horizontales.

De même que les variations de résistivité dans la direction verticale, les variations dans la direction radiale, même brutales, peuvent être prises en considération en conservant les mêmes noeuds et les mêmes mailles et en affectant des résistivités anisotropes à l'intérieur des mailles où les variations se produisent. Dans ce cas, la résistivité verticale $R_v$ est la moyenne harmonique pondérée des résistivités, le poids de chaque zone variant comme sa section transversale horizontale, et la résistivité horizontale $R_h$ est la moyenne arithmétique pondérée des résistivités, le poids de chaque zone variant comme le logarithme du rapport de son rayon extérieur à son rayon intérieur.

La raison en est que deux zones situées à l'intérieur d'une maille et séparées par une frontière de forme cylindrique (l'axe du cylindre coïncidant avec celui du sondage) sont en parallèle pour les courants verticaux, et en série pour les courants horizontaux. De plus la conductance verticale d'une telle zone est proportionnelle à sa section horizontale, tandis que sa résistance horizontale est proportionnelle au logarithme du rapport de ses rayons extérieur et intérieur.

Si la résistivité à l'intérieur d'une maille varie à la fois dans les directions horizontale et verticale, on la découpe en tranches horizontales dont l'épaisseur est égale au pas d'échantillonnage, et on calcule les résistivités verticales et horizontales de chacune de ces tranches par la méthode que l'on vient d'indiquer. Le pas d'échantillonnage étant constant, la résistivité verticale $R_v$ de la maille est alors la moyenne arithmétique des résistivités verticales des différentes tranches, et la résistivité horizontale $R_h$ est la moyenne harmonique des résistivités horizontales.

Le calcul par éléments finis donne les deux courbes de résistivités calculées de $R_{LLdcal}$ et $R_{LLscal}$ en fonction de la profondeur, qui représentent la réponse de l'outil à un profil de résistivité décrit par la courbe initiale $R_{LLd}$.

Du fait que l'outil possède une résolution verticale finie, les courbes calculées ont une résolution verticale inférieure à celle de la diagraphie originale. Pour permettre une comparaison avec la courbe initiale $R_{LLd}$, on lui applique en premier lieu un filtre égaliseur ayant la même résolution verticale que le dispositif de mesure de $R_{LLd}$, ou celui de $R_{LLs}$. En théorie, ces deux dispositifs ont des résolutions verticales légèrement différentes, de sorte que deux filtres différents devraient être utilisés. Jusqu'à présent, un filtre unique a toutefois donné des résultats satisfaisants.

Comme les différentes tranches des formations à l'intérieur de la zone d'investigation d'un Latérolog sont en parallèle, le filtrage consiste à calculer une moyenne harmonique pondérée des résistivités des échantillons sur un intervalle représentant l'épaisseur de la zone d'investigation, et à l'affecter à la profondeur de l'échantillon central. Selon l'outil considéré, les poids sont égaux dans la zone centrale, avec éventuellement deux poids plus faibles de part et d'autre, quand l'épaisseur de la zone d'investigation du dispositif n'est pas un multiple du pas d'échantillonnage. Les poids suivants: 0,005, 0,198 sur 5 échantillons consécutifs, et 0,005 ont donné de bons résultats pour les $R_{LLd}$ et $R_{LLs}$ du Double Latérolog, qui sont échantillonnés tous les demi-pieds (15 cm).

On appellera $R_{LLdav}$ et $R_{LLsav}$ les valeurs filtrées de $R_{LLd}$ et de $R_{LLs}$.

L'étape suivante consiste à comparer les valeurs initiales filtrées aux valeurs calculées $R_{LLdcal}$ et $R_{LLscal}$. Bien entendu, si par exemple $R_{LLdcal}$ est plus petit que $R_{LLdav}$, la valeur initiale $R_{LLd}$ supposée pour la résistivité est trop faible. Si l'on suppose que les effets d'épontes et de trou sont les mêmes pour le profil de résistivité des formations effectif et pour des formations qui auraient une résistivité égale à $R_{LLd}$ ou à $R_{LLs}$; les valeurs corrigées $R_{LLdcor}$ et $R_{LLscor}$ seraient respectivement données par

$$R_{LLdcor} = R_{LLd} \times \frac{R_{LLdav}}{R_{LLdcal}}$$

et

$$R_{LLscor} = R_{LLs} \times \frac{R_{LLdav}}{R_{LLscal}}$$

En fait, les effets d'épontes et de trou ne sont pas exactement les mêmes pour les deux formations et les rapports $R_{LLdav}/R_{LLdcal}$ et $R_{LLdav}/R_{LLscal}$ peuvent être légèrement relevés avant d'appliquer les corrections, par exemple en les élevant à une puissance légèrement supérieure à 1. En variante, ou concurremment, une ou plusieurs itérations pourraient être réalisées. Les résultats représentés aux figures ont été obtenus sans relèvement des rapports précités et en une seule passe.

Le même filtre a été utilisé pour $R_{LLd}$ et $R_{LLs}$.

On observera que le procédé selon l'invention corrige simultanément les effets d'épontes et de trou. De plus, du fait que les courbes calculées $R_{LLdcal}$ et $R_{LLscal}$ tendent à présenter les mêmes artefacts - tels que les "cornes" précitées - que les courbes originales, ceux-ci sont pour l'essentiel éliminés par le procédé selon l'invention.

Dans les courbes représentées aux figures, les formations sont supposées non envahies. On notera bien que $R_t$ est un profil réel supposé rectangulaire : il ne s'agit en aucune manière d'une diagraphie rectangularisée pour les besoins du calcul comme dans l'art antérieur.

On constate que les courbes corrigées sont très proches l'une de l'autre, comme on doit s'y attendre dans le cas de formations non envahies, et proches du profil rectangulaire initial $R_t$. La plupart des "cornes" et autres irrégularités ont disparu. Bien entendu, les discontinuités du profil réel ne sont pas reproduites, mais, comme indiqué plus haut, on ne dispose pas des informations nécessaires à leur restitution, informations qui ont été "gommées" lors de la mesure diagraphique. On peut toutefois à ce stade, si on le désire, rectangulariser les courbes corrigées.

## Revendications

1. Procédé de détermination de la résistivité des formations traversées par un forage, à partir d'une diagraphie de résistivité enregistrée dans le forage réalisé dans ces formations, ledit procédé comprenant les étapes consistant à

   déduire de cette diagraphie un modèle initial de la résistivité dans les formations traversées par le forage,
   calculer la réponse dudit outil audit modèle initial,
   comparer ladite réponse calculée à la diagraphie enregistrée, et
   déduire de cette comparaison un nouveau modèle de résistivité,
   procédé caractérisé par le fait que
   ladite réponse de l'outil au modèle initial est calculée sur la base d'un maillage des formations dépendant uniquement de la géométrie de l'outil, et
   à chaque maille sont affectées une résistivité verticale et une résistivité horizontale généralement différentes.

2. Procédé de détermination de la résistivité des formations traversées par un forage, comprenant les étapes consistant à

   effectuer, à l'aide d'un outil de mesure et d'enregistrement de résistivité, une diagraphie de résistivité dans le forage réalisé dans ces formations, en mesurant et en enregistrant au moins une résistivité en des points d'échantillonnage espacés le long du forage,
   déduire de cette diagraphie un modèle initial de la résistivité dans les formations traversées par le forage,
   calculer la réponse dudit outil audit modèle initial,
   comparer ladite réponse calculée à la diagraphie enregistrée, et
   déduire de cette comparaison un nouveau modèle de résistivité,
   procédé caractérisé par le fait que
   ladite réponse de l'outil au modèle initial est calculée sur la base d'un maillage des formations dépendant uniquement de la géométrie de l'outil, et

à chaque maille sont affectées une résistivité verticale et une résistivité horizontale généralement différentes.

3. Procédé selon l'une quelconque des revendications 1 et 2, dans lequel ledit modèle initial est constitué par la diagraphie de résistivité profonde effectuée dans ledit forage.

4. Procédé selon l'une quelconque des revendications 1 et 2, dans lequel ledit modèle initial est constitué par le nouveau modèle issu d'une itération précédente.

5. Procédé selon l'une quelconque des revendications 1 à 4, dans lequel ladite résistivité verticale d'une maille du modèle est prise sensiblement égale à une moyenne arithmétique pondérée des résistivités du modèle à chaque point d'échantillonnage du forage dans l'intervalle correspondant à ladite maille.

6. Procédé selon l'une quelconque des revendications 1 à 5, dans lequel ladite résistivité horizontale d'une maille du modèle est prise sensiblement égale à une moyenne harmonique pondérée des résistivités du modèle à chaque point d'échantillonnage du forage dans l'intervalle correspondant à ladite maille.

7. Procédé selon l'une quelconque des revendications 1 à 6, dans lequel ladite réponse à la diagraphie enregistrée est calculée par une méthode d'éléments finis.

8. Procédé selon l'une quelconque des revendications 1 à 7, dans lequel les valeurs de la diagraphie enregistrée sont moyennées préalablement à la comparaison de la réponse calculée à la diagraphie calculée.

9. Procédé selon la revendications 8, dans lequel on applique aux valeurs de la diagraphie enregistrée une correction fonction des valeurs de la diagraphie moyennée et des valeurs de la réponse calculée.

10. Procédé selon la revendications 9, dans lequel ladite correction consiste à multiplier les valeurs de la diagraphie enregistrée par le rapport des valeurs correspondantes de la diagraphie moyennée et de la réponse calculée.

Fig. 1

Fig. 2

Fig. 3

Office européen
des brevets

**RAPPORT DE RECHERCHE EUROPEENNE**

Numéro de la demande

EP 00 40 0943

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 867 806 A (JACKSON CHARLES E ET AL) 2 février 1999 (1999-02-02) * le document en entier * --- | 1,2 | G01V3/38 G01V3/20 |
| A | US 5 889 729 A (FRENKEL MICHAEL A ET AL) 30 mars 1999 (1999-03-30) * abrégé * * colonne 1 * --- | 1,2 | |
| A | US 5 210 691 A (FREEDMAN ROBERT ET AL) 11 mai 1993 (1993-05-11) * colonne 13, ligne 56-65 * --- | 1,2 | |
| A | US 5 675 147 A (EKSTROM MICHAEL P ET AL) 7 octobre 1997 (1997-10-07) * colonne 2, ligne 29-44 * --- | 1,2 | |
| A | WO 95 03557 A (WESTERN ATLAS INT INC) 2 février 1995 (1995-02-02) * abrégé * --- | 1,2 | |
| A | EP 0 509 908 A (SCHLUMBERGER LTD ;SCHLUMBERGER SERVICES PETROL (FR); SCHLUMBERGER) 21 octobre 1992 (1992-10-21) * abrégé * * page 11 * --- | 1,2 | DOMAINES TECHNIQUES RECHERCHES (Int.Cl.7) G01V |
| A | US 5 446 654 A (CHEMALI ROLAND E ET AL) 29 août 1995 (1995-08-29) * colonne 2, ligne 8-41; figure 4 * --- | 1,2 | |
| A | EP 0 478 409 A (SCHLUMBERGER LTD ;SCHLUMBERGER TECHNOLOGY BV (NL); SCHLUMBERGER HO) 1 avril 1992 (1992-04-01) * colonne 1, ligne 12-35; figure 1 * --- | 1,2 | |

-/--

Le présent rapport a été établi pour toutes les revendications

| Lieu de la recherche | Date d'achèvement de la recherche | Examinateur |
|---|---|---|
| BERLIN | 25 juillet 2000 | Brison, O |

**Office européen des brevets**

**RAPPORT DE RECHERCHE EUROPEENNE**

Numéro de la demande

EP 00 40 0943

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 552 088 A (SCHLUMBERGER LTD ;SCHLUMBERGER SERVICES PETROL (FR); SCHLUMBERGER) 21 juillet 1993 (1993-07-21) * colonne 4, ligne 33-37; figure 5 * --- | 1,2 | |
| A | EP 0 840 141 A (WESTERN ATLAS INT INC) 6 mai 1998 (1998-05-06) * revendication 1; figure 3A * ----- | 1,2 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| BERLIN | 25 juillet 2000 | Brison, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 043 604 A1**

## ANNEXE AU RAPPORT DE RECHERCHE EUROPEENNE
## RELATIF A LA DEMANDE DE BREVET EUROPEEN NO.

EP 00 40 0943

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-07-2000

| Document brevet cité au rapport de recherche | | Date de publication | Membre(s) de la famille de brevet(s) | | Date de publication |
|---|---|---|---|---|---|
| US 5867806 | A | 02-02-1999 | CA | 2248253 A | 18-09-1997 |
| | | | EP | 0886794 A | 30-12-1998 |
| | | | WO | 9734168 A | 18-09-1997 |
| US 5889729 | A | 30-03-1999 | CA | 2216738 A | 30-03-1998 |
| | | | GB | 2318196 A | 15-04-1998 |
| | | | NL | 1007156 C | 14-09-1998 |
| | | | NL | 1007156 A | 31-03-1998 |
| | | | NO | 974085 A | 31-03-1998 |
| US 5210691 | A | 11-05-1993 | AUCUN | | |
| US 5675147 | A | 07-10-1997 | AU | 1829697 A | 11-08-1997 |
| | | | CA | 2238717 A | 24-07-1997 |
| | | | EP | 0876628 A | 11-11-1998 |
| | | | NO | 983354 A | 21-07-1998 |
| | | | WO | 9726562 A | 24-07-1997 |
| WO 9503557 | A | 02-02-1995 | CA | 2144438 A | 02-02-1995 |
| | | | EP | 0665958 A | 09-08-1995 |
| | | | NO | 951007 A | 19-05-1995 |
| | | | US | 5883515 A | 16-03-1999 |
| EP 0509908 | A | 21-10-1992 | US | 5355088 A | 11-10-1994 |
| US 5446654 | A | 29-08-1995 | AUCUN | | |
| EP 0478409 | A | 01-04-1992 | FR | 2666661 A | 13-03-1992 |
| | | | AU | 649714 B | 02-06-1994 |
| | | | AU | 8380091 A | 19-03-1992 |
| | | | DE | 69106647 D | 23-02-1995 |
| | | | DK | 478409 T | 19-06-1995 |
| | | | NO | 303251 B | 15-06-1998 |
| | | | US | 5268641 A | 07-12-1993 |
| | | | ZA | 9107221 A | 27-05-1992 |
| EP 0552088 | A | 21-07-1993 | FR | 2686159 A | 16-07-1993 |
| | | | AU | 665792 B | 18-01-1996 |
| | | | AU | 3115293 A | 15-07-1993 |
| | | | DE | 69313881 D | 23-10-1997 |
| | | | DK | 552088 T | 11-05-1998 |
| | | | MX | 9300172 A | 01-11-1993 |
| | | | NO | 304714 B | 01-02-1999 |
| | | | US | 5343153 A | 30-08-1994 |
| EP 0840141 | A | 06-05-1998 | US | 5862513 A | 19-01-1999 |

EPO FORM P0460

**ANNEXE AU RAPPORT DE RECHERCHE EUROPEENNE
RELATIF A LA DEMANDE DE BREVET EUROPEEN NO.**

EP 00 40 0943

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-07-2000

| Document brevet cité<br>au rapport de recherche | Date de<br>publication | Membre(s) de la<br>famille de brevet(s) | Date de<br>publication |
|---|---|---|---|
| EP 0840141 A | | CA 2217427 A<br>NO 974548 A | 01-05-1998<br>04-05-1998 |

EPO FORM P0460

Pour tout renseignement concernant cette annexe : voir Journal Officiel de l'Office européen des brevets, No.12/82